# EUROPÄISCHE PATENTANMELDUNG

(11) **EP 4 541 471 A1**
(43) Veröffentlichungstag der Anmeldung: **23.04.2025**
(21) Anmeldenummer: 23204606.0
(22) Anmeldetag: 19.10.2023
(51) Int. Cl.: B21D 5/04, B21D 55/00, B30B 15/28, F16P 3/14

(54) **SCHUTZEINRICHTUNG, BIEGEMASCHINE UND VERFAHREN ZUM BETREIBEN EINER BIEGEMASCHINE**

(71) Anmelder: Fiessler Elektronik GmbH & Co. KG, 73773 Aichwald (DE)
(72) Erfinder: Fiessler, Lutz, 73773 Aichwald (DE); Müller, Frank, 73207 Plochingen (DE)
(74) Vertreter: Patentanwälte Magenbauer & Kollegen Partnerschaft mbB

(57) **Zusammenfassung**

Die Erfindung betrifft eine Schutzeinrichtung (51) zur Absicherung eines Arbeitsspalts (14) einer Umformeinrichtung (1), mit einer Strahlenquelle (52) zur Bereitstellung eines Strahlenbündels (56) in den Arbeitsspalt (14) und mit einem gegenüberliegend zur Strahlenquelle (52) angeordneten Strahlenempfänger (54) zum Empfang von Strahlen des Strahlenbündels (56), sowie mit einer sicherheitsgerichteten Lichtschrankensteuerung (71) zur redundanten Verarbeitung von Sensorsignalen des Strahlenempfängers (54), mit einer Verstelleinrichtung (28) zur Anbringung an einem Maschinenrahmen oder an einem Oberwerkzeug (21) einer Umformeinrichtung (1) sowie zur Bereitstellung einer linearen Bewegung für die Strahlenquelle (52) und den Strahlenempfänger (54), wobei die Verstelleinrichtung (28) einen Antrieb (26, 27) und ein sicherheitsgerichtet ausgebildetes Wegmesssystem (58, 59, 60) mit einem Wegsensor und einer Kontrollanordnung für den Wegsensor umfasst, sowie mit einer sicherheitsgerichtet ausgebildeten Verstellsteuerung (83), die mit der Verstelleinrichtung (28) für eine Auswertung von Sensorsignalen des Wegsensors und von Signalen der Kontrollanordnung und für eine geregelte Ansteuerung des Antriebs (26, 27) verbunden ist.

## Beschreibung

Die Erfindung betrifft eine Schutzeinrichtung, eine Biegemaschine und ein Verfahren zum Betreiben einer Biegemaschine.

Die DE 1 971 7299 A1 offenbart eine Schutzeinrichtung für Maschinen wie Abkantpressen, Schneidemaschinen, Stanzmaschinen, bei denen ein erstes Maschinenteil Arbeitsbewegungen gegen ein zweites Maschinenteil ausführt, wobei eine erste Lichtschranke, insbesondere eine Laser-Lichtschranke, deren Licht-Strahl senkrecht zur Arbeitsbewegungsrichtung verläuft, zwischen den beiden Maschinenteilen an einem derselben so positionierbar ist, daß ihr Licht-Strahl einen Sicherheitsabstand zu diesem Maschinenteil aufweist und wobei eine Blockiereinrichtung vorgesehen ist, die die Arbeitsbewegung bei einer Unterbrechung dieses Licht-Strahls unterbricht und wobei eine Abschalteinrichtung unmittelbar vor Unterbrechung dieses Licht-Strahls durch das andere Maschinenteil die Blockiereinrichtung abschaltet. Eine zweite, zur Einstellung des Sicherheitsabstands dienende Lichtschranke ist zusammen mit der ersten Lichtschranke an einer in der Arbeitsbewegungsrichtung verstellbar an dem einen Maschinenteil angeordneten Sicherheitseinrichtung montiert, wobei der Licht-Strahl der zweiten Lichtschranke parallel zum Licht-Strahl der ersten Lichtschranke zwischen diesem und dem einen Maschinenteil verläuft und wobei der Abstand zwischen den beiden Licht-Strahlen im Wesentlichen dem Sicherheitsabstand entspricht.

Die DE 10123562 beschreibt eine Schutzeinrichtung für Maschinen wie Abkantpressen, Schneidemaschinen, Stanzmaschinen oder dergleichen, bei denen ein erstes Maschinenteil Arbeitsbewegungen gegen ein zweites Maschinenteil ausführt, wobei wenigstens eine Lichtschranke zwischen den beiden Maschinenteilen an einem derselben so positionierbar ist, dass ihr Licht-strahl einen Sicherheitsabstand zu diesem Maschinenteil aufweist, der durch eine die Lichtschranke tragende Sicherheitseinrichtung einstellbar ist und bei einer Unterbrechung des Lichtstrahls eine Blockiereinrichtung die Arbeitsbewegung stoppt. Ferner sind Mittel zur Durchführung einer ersten Bewegung der Sicherheitseinrichtung bis zur Unterbrechung des Lichtstrahls durch das die Sicherheitseinrichtung tragende Maschinenteil sowie zur Durchführung einer zweiten Bewegung der Sicherheitseinrichtung in die entgegengesetzte Richtung vorgesehen, wobei die den Sicherheitsabstand vorgebende Wegstrecke der zweiten Bewegung durch eine elektrische Mess- und/oder Steuereinrichtung vorgebbar ist.

Die Aufgabe der Erfindung besteht darin, eine Schutzeinrichtung, eine Biegemaschine und ein Verfahren zum Betreiben einer Biegemaschine bereitzustellen, die mit denen ein verbessertes Sicherheitsniveau erzielt werden kann.

Diese Aufgabe wird gemäß einem ersten Erfindungsaspekt mit einer Schutzeinrichtung zur Absicherung eines Arbeitsspalts einer Umformeinrichtung gelöst. Die Schutzeinrichtung umfasst hierzu eine Strahlenquelle, die zur Bereitstellung eines Strahlenbündels in den Arbeitsspalt ausgebildet ist, und einen gegenüberliegend zur Strahlenquelle angeordneten Strahlenempfänger, der zum Empfang von Strahlen des Strahlenbündels ausgebildet ist, sowie mit einer sicherheitsgerichtet ausgebildeten Lichtschrankensteuerung, die zur redundanten Verarbeitung von Sensorsignalen des Strahlenempfängers ausgebildet ist, eine Verstelleinrichtung, die zur Anbringung an einem Maschinenrahmen oder an einem Oberwerkzeug einer Umformeinrichtung sowie zur Bereitstellung einer linearen Bewegung für die Strahlenquelle und den Strahlenempfänger ausgebildet ist, wobei die Verstelleinrichtung einen Antrieb und ein sicherheitsgerichtet ausgebildetes Wegmesssystem mit einem Wegsensor und einer Kontrollanordnung für den Wegsensor umfasst, sowie mit einer sicherheitsgerichtet ausgebildeten Verstellsteuerung, die mit der Verstelleinrichtung verbunden ist und die für eine Auswertung von Sensorsignalen Sensorsignalen des Wegsensors und von Signalen der Kontrollanordnung und für eine geregelte Ansteuerung des Antriebs ausgebildet ist.

Die Aufgabe der Schutzeinrichtung besteht darin, einen größenvariablen Arbeitsspalt einer Umformeinrichtung, bei der es sich beispielsweise um eine Abkantpresse oder eine Schwenkbiegemaschine handeln kann, abzusichern. Diese Absicherung ist darauf ausgerichtet, einen Bediener der Umformeinrichtung, der ein Werkstück zur Durchführung eines Umformvorgangs manuell in den Arbeitsspalt einschiebt oder unmittelbar vor Durchführung des Umfangvorgangs manuell ausrichtet, vor einer Quetschgefahr, die insbesondere für die Finger des Bedieners besteht, zu schützen.

Diese Quetschgefahr geht beispielsweise bei einer Abkantpresse davon aus, dass für die Durchführung des Abkantvorgangs ein Oberwerkzeug an ein Unterwerkzeug, das die Werkstückauflagefläche für das Werkstück bildet, angenähert wird, wodurch sich der Arbeitsspalt verkleinert und somit das Risiko besteht, dass die Finger oder die Hand oder der Unterarm des Bedieners im Arbeitsspalt zwischen dem Oberwerkzeug und dem Unterwerkzeug oder zwischen dem Oberwerkzeug und dem in den Arbeitsspalt eingeschobenen Werkstück eingequetscht werden.

Bei einer Schwenkbiegemaschine wird der Arbeitsspalt von einem Niederhalter für das Werkstück und einer Werkstückauflagefläche oder einem auf der Werkstückauflagefläche aufliegenden Werkstück begrenzt, wobei der Niederhalter unter Verkleinerung des Arbeitsspalts an die Werkstückauflagefläche angenähert wird, um das Werkstück für den nachfolgenden Schwenkbiegevorgang festzulegen. Auch hier besteht bei der Annäherung des Niederhalters an die Werkstückauflagefläche aufgrund der Verkleinerung des Arbeitsspalts das Risiko, dass die Finger oder die Hand oder der Unterarm des Bedieners im Arbeitsspalt eingequetscht werden.

Dementsprechend besteht die Aufgabe der Schutzeinrichtung darin, den Arbeitsspalt dahingehend abzusichern, dass ein Annäherungsvorgang für das Oberwerkzeug an ein Unterwerkzeug oder eine Werkstückauflagefläche unterbrochen wird, sofern ein Eingriff eines Bedieners in den Arbeitsspalt erfolgt und der Arbeitsspalt bereits in einer Weise verkleinert ist, dass eine Gefahr für den Bediener besteht.

Die hierzu vorgesehene optische Strahlenquelle stellt hierzu ein optisches Strahlenbündel, vorzugsweise in einem Wellenlängenbereich zwischen 360 nm und 850 nm, insbesondere ein monochromatisches Strahlenbündel, zur Verfügung. Das Strahlenbündel kann beispielsweise als Einzelstrahl, insbesondere als Laserstrahl, als Anordnung mehrerer parallel zueinander ausgerichtete oder Hinblick zueinander ausgerichteter Strahlen in der Art eines Lichtvorhangs oder als bandförmige Strahlenanordnung bereitgestellt werden. Vorzugsweise ist vorgesehen, dass eine optische Achse der Strahlenquelle parallel zu einer Unterkante des Oberwerkzeugs ausgerichtet ist. Besonders bevorzugt ist vorgesehen, dass sich das Strahlenbündel längs der gesamten Unterkante des Oberwerkzeugs erstreckt und damit eine Gesamtbreite des Arbeitsspalts überdeckt.

Der Strahlenempfänger ist ein elektrisches oder elektronisches Bauteil, insbesondere aus der Gruppe: lichtempfindliche Diode, lichtempfindliches Diodenarray, CCD-Kamerachip, und ist zum Empfang von Strahlen des Strahlenbündels sowie zur Bereitstellung eines elektrischen Sensorsignals ausgebildet. Vorzugsweise ist der Strahlenempfänger derart gegenüber der Strahlenquelle angeordnet, dass ohne eine Störkontur im optischen Pfad zwischen der Strahlenquelle und dem Strahlenempfänger sämtliche Strahlen des Strahlenbündels auf den Strahlenempfänger auftreffen. Der Strahlenempfänger stellt das elektrische Sensorsignal an eine sicherheitsgerichtet ausgebildete Lichtschrankensteuerung bereit, wobei es sich bei dem elektrischen Signal um ein Analogsignal oder um ein digital codiertes Signal handeln kann. Das elektrische Sensorsignal repräsentiert insbesondere eine Lichtstärke der vom Strahlenempfänger empfangenen Strahlen des Strahlenbündels. In der Lichtschrankensteuerung wird eine Auswertung des elektrischen Sensorsignals, insbesondere unter Verwendung eines in der Lichtschrankensteuerung gespeicherten Schwellwerts, vorgenommen, um feststellen zu können, ob das von der Strahlenquelle bereitgestellte Strahlenbündel störungsfrei auf den Strahlenempfänger auftrifft oder ob sich eine Störkontur, beispielsweise ein Finger oder eine Hand eines Bedieners, in dem optischen Pfad zwischen der Strahlenquelle und dem Strahlenempfänger befindet.

Die sicherheitsgerichtet ausgebildete Lichtschrankensteuerung ist insbesondere für eine redundante Verarbeitung des elektrischen Sensorsignals des Strahlenempfängers ausgebildet. Die Redundanz für die Verarbeitung der Sensorsignale kann beispielsweise durch die Verwendung von zwei unabhängig voneinander arbeitenden Prozessoren in der Lichtschrankensteuerung realisiert werden, die beide das Sensorsignal des Strahlenempfängers verarbeiten. Die Lichtschrankensteuerung ist insbesondere so ausgebildet, dass sie ein Unterbrechungssignal bereitstellt, wenn bei der redundanten Verarbeitung des Sensorsignals eine Differenz zwischen den beiden Verarbeitungsergebnissen für das Sensorsignal auftreten sollte, die größer als eine vorgegebene Maximaldifferenz ist. Alternativ zur Bereitstellung eines Unterbrechungssignals kann die Lichtschrankensteuerung auch für die Bereitstellung eines Freigabesignals ausgebildet sein, das jedoch nur dann ausgegeben wird, wenn keine Unterbrechung des Strahlenbündels bzw. keine Überschreitung der vorgegebenen Maximaldifferenz zwischen den beiden Verarbeitungsergebnissen für das Sensorsignal vorliegt.

Um eine vorteilhafte Schutzwirkung der Schutzeinrichtung gewährleisten zu können, ist es vorgesehen, dass die Strahlenquelle und der Strahlenempfänger an einer Verstelleinrichtung angebracht sind, die ihrerseits zu Anbringung an einem Maschinenrahmen der Umformeinrichtung oder an dem Oberwerkzeug oder eine Führung für das Oberwerkzeug vorgesehen ist. Mit der Verstelleinrichtung kann eine lineare Relativbewegung der Strahlenquelle und des Strahlenempfängers in längs einer Bewegungsachse durchgeführt werden, wobei diese Bewegungsachse durch die Relativbewegung zwischen dem Oberwerkzeug und dem Unterwerkzeug bzw. dem Oberwerkzeug und der Werkstückauflagefläche bestimmt wird. Typischerweise ist die Bewegungsachse in vertikaler Richtung ausgerichtet.

Die Verstelleinrichtung umfasst einen Antrieb, der von der Lichtschrankensteuerung angesteuert werden kann, um die gewünschte Relativbewegung der Strahlenquelle und des Strahlenempfängers längs der Bewegungsachse zu bewirken. Rein exemplarisch umfasst der Antrieb einen Elektromotor, beispielsweise einen Schrittmotor, dem eine Getriebeeinrichtung zur Umsetzung einer Rotationsbewegung des Elektromotors in die gewünschte Linearbewegung zugeordnet ist. Alternativ kann der Antrieb beispielsweise als elektrodynamischer Lineardirektantrieb oder als fluidisch betriebener Linearzylinder ausgebildet sein. Eine vom Antrieb bereitgestellte Linearbewegung kann auf ein linearbeweglich am Maschinenrahmen oder am Oberwerkzeug angeordnetes Trägerteil eingeleitet werden, an dem die Strahlenquelle und der Strahlenempfänger gemeinsam angebracht sind. Alternativ können die Strahlenquelle und der Strahlenempfänger jeweils separat linearbeweglich am Maschinenrahmen oder am Oberwerkzeug angebracht sein und über ein Zugmittel, beispielsweise einen Zahnriemen oder einen Seilzug, mit dem Antrieb gekoppelt sein, um eine synchrone Bewegung von Strahlenquelle und Strahlenempfänger zu gewährleisten. Bei einer weiteren alternativen Ausgestaltung des Antriebs ist sowohl der Strahlenquelle als auch dem Strahlenempfänger jeweils eine Antriebseinheit zugeordnet, die jeweils als Elektromotor mit Getriebeeinrichtung oder als elektrodynamischer Lineardirektantrieb oder als fluidisch betriebener Linearzylinder ausgebildet ist.

Ferner umfasst die Verstelleinrichtung ein sicherheitsgerichtet ausgebildetes Wegmesssystem, das zur Ermittlung einer Position der Strahlenquelle und des Strahlenempfängers relativ zum Maschinenrahmen oder zum Oberwerkzeug ausgebildet ist. Um eine sicherheitsgerichtete Ermittlung der Position der Verstelleinrichtung relativ zum Maschinenrahmen oder zum Oberwerkzeug gewährleisten zu können, umfasst das Wegmesssystem einen Wegsensor und eine Kontrollanordnung für den Wegsensor.

Hierbei ist vorgesehen, dass der Wegsensor die zur Positionsbestimmung für die Verstelleinrichtung erforderliche Positionsauflösung aufweist, während die Funktion der Kontrollanordnung darin zu sehen ist, der Verstellsteuerung eine Plausibilitätskontrolle für die Signale des Wegsensors zu ermöglichen.

Beispielhaft kann vorgesehen sein, dass der Wegsensor eine Positionsauflösung von 0,1mm ermöglicht und dass die Kontrollanordnung entweder mehrere längs eines Verstellwegs der Verstelleinrichtung angeordnete Magnetsensoren oder eine Zeitmesseinrichtung umfasst. Die Aufgabe der Verstellsteuerung besteht dann darin, auf Basis der Signale der Kontrollanordnung zu prüfen, ob das Sensorsignal des Wegsensors plausibel ist.

Wird die Kontrollanordnung beispielsweise von Magnetsensoren gebildet, so kann die Verstellsteuerung anhand der Signale der Wegsensoren ermitteln, wo sich die Strahlenquelle und der Strahlenempfänger ungefähr befinden und kann diese ungefähre Positionsangabe mit dem Sensorsignal des Wegsensors abgleichen.

Wird die Kontrollanordnung durch eine Zeitmesseinrichtung gebildet, so kann die Verstellsteuerung eine Aktivierungsdauer für den Antrieb der Verstelleinrichtung ermitteln und aus dieser Aktivierungsdauer und einer bekannten Geschwindigkeit für die Verstelleinrichtung eine ungefähre Position für die Strahlenquelle und der Strahlenempfänger bestimmen, die mit dem Sensorsignal des Wegsensors abgeglichen werden kann.

Der Wegsensor kann Relativmeßsysten, beispielsweise durch Erfassung eines Drehwinkels eines Antriebsmotors, ausgebildet sein. Eine solche Drehwinkelerfassung kann beispielsweise anhand von Pulsen eines Abtastsensors, der zur Abtastung von Flügeln eines Lüfterrads des Antriebsmotors ausgebildet ist, vorgenommen werden.

Die vorstehenden Kombinationen von Wegsensor und Kontrollanordnung werden auch als zweikanalige redundante Meßsysteme bezeichnet, da Informationen aus zwei unterschiedlichen Signalquellen verglichen werden.

Besonders bevorzugt ist vorgesehen, dass die Kontrollanordnung ebenfalls als Wegsensor ausgebildet ist. Hierzu können insbesondere zwei identisch ausgebildete Wegsensoren eingesetzt werden, deren Sensorsignale an die Verstellsteuerung bereitgestellt werden. Alternativ können auch technisch völlig unterschiedliche Wegsensoren eingesetzt werden, womit eine diversitäre Redundanz verwirklicht wird. Wenigstens einer der Wegsensoren kann unmittelbar zur Ermittlung einer Weginformation ausgebildet sein, wie das beispielsweise bei einem optischen oder magnetischen Sensor der Fall ist, der einen längs der Bewegungsachse erstreckten Maßstab abtastet. Alternativ können einer oder beide Wegsensoren für eine mittelbare Wegmessung ausgebildet sein, bei der beispielsweise während der Bewegung wiederkehrende Ereignisse ermittelt werden. Rein exemplarisch ist vorgesehen, dass die Wegsensoren zur Ermittlung von Umdrehungen einer Antriebswelle eines Elektromotors oder einer Gewindespindel eingesetzt werden, um in Kenntnis der Eigenschaften einer dem Elektromotor nachgelagerten Getriebeeinrichtung aus der Anzahl der Umdrehungen auf den Verstellweg der Verstelleinrichtung schließen zu können. Alternativ kann auch eine Abtastung von Zähnen eines Zahnriemenantriebs zur Positionsermittlung vorgenommen werden.

Alternativ kann der Wegsensor als Absolutmeßsystem, beispielsweise durch Abtastung eines mit einem eineindeutigen Gray-Code versehenen Glasmaßstabs, verwirklicht sein. In diesem Fall kann die Kontrollanordnung derart ausgebildet sein, dass durch die Kontrollanordnung jeweils neu eintreffende Sensorsignale des Wegsensors daraufhin überprüft werden, ob sie exakt in einer vorgegebenen Reihe zu zeitlich vorausgehend eingetroffenen Sensorsignalen liegen und damit ausgeschlossen werden kann, dass ein Messfehler des Absolutmeßsystems vorliegt. Ein solches Wegmeßsystem wird als einkanalig bezeichnet, da nur eine einzige Signalquelle vorliegt und die sicherheitsgerichteten Eigenschaften durch eine zusätzliche Signalauswertung gewährleistet werden.

In der sicherheitsgerichtet ausgebildeten Verstellsteuerung findet eine redundante Verarbeitung der eintreffenden Sensorsignale des Wegmesssystems statt. Hierzu kann beispielsweise vorgesehen sein, dass die Verstellsteuerung zwei unabhängig voneinander arbeitende, insbesondere auch technologisch unterschiedlich ausgebildete und unterschiedlich programmierte, Prozessoren aufweist, die jeweils eines der Sensorsignale des Wegmesssystems verarbeiten. Ferner ist vorgesehen, dass nach der Verarbeitung der Sensorsignale ein Vergleich der daraus resultierenden Positionsinformationen zwischen den beiden Prozessoren vorgenommen wird, wobei ein ermittelter Positionswert als korrekt angenommen wird, wenn beide Positionsinformationen innerhalb eines vorgegebenen Toleranzintervalls liegen. In diesem Fall kann die Verstellsteuerung mit dem ermittelten Positionssignal weitere Arbeitsschritte der Umformeinrichtung auslösen. Beispielsweise kann die Verstellsteuerung ein Freigabesignal an die Maschinensteuerung bereitstellen, so dass die Maschinensteuerung bei einer nachfolgenden Betätigung eines entsprechenden Bedienschalters wie beispielsweise eines Fußschalters, eine Bewegung des Oberwerkzeugs einleiten kann.

Alternativ kann eine redundante Signalverarbeitung in der Verstellsteuerung auch dadurch verwirklicht werden, dass die Signale des Wegmesssystems in einem einzigen Prozessor zwei unabhängigen Berechnungsalgorithmen zugeführt werden, um zwei Positionsinformationen zu ermitteln, die anschließend miteinander verglichen werden, wobei ein ermittelter Positionswert als korrekt angenommen wird, wenn beide Positionsinformationen innerhalb eines vorgegebenen Toleranzintervalls liegen.

Vorteilhafte Weiterbildungen der Erfindung sind Gegenstand der Unteransprüche.

Zweckmäßig ist es, wenn die Verstellsteuerung eine Kommunikationsschnittstelle aufweist, die für einen Empfang von Steuerinformationen einer Maschinensteuerung sowie für eine Ausgabe von Sicherheitsinformationen an die Maschinensteuerung und/oder an die Lichtschrankensteuerung und/oder an eine Sicherheitssteuerung ausgebildet ist. Hierbei wird davon ausgegangen, dass die Schutzeinrichtung als weitgehend autark arbeitendes System ausgebildet ist, das zur Integration in eine Umformeinrichtung vorgesehen ist, die eine nicht sicherheitsgerichtet ausgebildete Maschinensteuerung sowie eine sicherheitsgerichtet ausgebildete Sicherheitssteuerung aufweist. Hierbei dient die Kommunikationsschnittstelle der Verstellsteuerung zum einen einer Kommunikation mit der Maschinensteuerung, beispielsweise um Steuerinformationen wie eine Werkzeugdimension, insbesondere eine Werkzeughöhe, von der Maschinensteuerungen erhalten zu können.

Zum anderen dient die Kommunikationsschnittstelle zur Ausgabe von Sicherheitsinformationen, die an die Maschinensteuerung und/oder an die Lichtschrankensteuerung und/oder an die Sicherheitssteuerung zur Verfügung gestellt werden können. Bei der Sicherheitsinformation kann es sich beispielsweise um ein Freigabesignal handeln, mit dem ausgedrückt wird, dass die Schutzeinrichtung eine für den vorgesehenen Umformvorgang erforderliche Schutzposition eingenommen hat. Dementsprechend weist die Kommunikationsschnittstelle einen ersten Kommunikationsbereich für die Kommunikation mit der Maschinensteuerung auf, wobei dieser Kommunikationsbereich beispielsweise als Busschnittstelle ausgebildet sein kann und gegebenenfalls auch für eine bidirektionale Kommunikation, insbesondere eine Buskommunikation, mit der Maschinensteuerung ausgebildet ist.

Ergänzend kann die Kommunikationsschnittstelle einen zweiten Kommunikationsbereich für die Kommunikation mit der Lichtschrankensteuerung und/oder mit einer Sicherheitsteuerung aufweisen, über die beispielsweise das Freigabesignal bereitgestellt werden kann.

Die Aufgabe der Erfindung wird gemäß einem zweiten Erfindungsaspekt mit einer Biegemaschine gelöst. Die Biegemaschine umfasst ein Maschinenbett, an dem ein Maschinentisch ausgebildet ist, der eine zum Auflegen eines Werkstücks ausgebildete Werkstückauflagefläche aufweist, sowie ein linearbeweglich längs einer Bewegungsachse am Maschinenbett gelagertes Oberwerkzeug, dem eine Antriebseinrichtung zugeordnet ist und das mit dem Maschinentisch einen größenvariablen Arbeitsspalt bestimmt, sowie eine Maschinensteuerung zur Bereitstellung von Antriebsenergie an die Antriebseinrichtung, mit einer Sicherheitssteuerung zur Unterbrechung einer Antriebsbewegung der Antriebseinrichtung, und eine Schutzeinrichtung zur Absicherung des Arbeitsspalts, die eine Strahlenquelle zur Bereitstellung eines optischen Strahlenbündels und einen gegenüberliegend zur Strahlenquelle angeordneten Strahlenempfänger zum Empfang von Strahlen des optischen Strahlenbündels sowie eine sicherheitsgerichtet ausgebildete Lichtschrankensteuerung zur redundanten Verarbeitung von Sensorsignalen des Strahlenempfängers aufweist, wobei die Schutzeinrichtung eine Verstelleinrichtung umfasst, die am Maschinenbett oder am Oberwerkzeug angebracht ist und die zur Bereitstellung einer linearen Bewegung der Strahlenquelle und des Strahlenempfängers längs der Bewegungsachse ausgebildet ist, wobei die Verstelleinrichtung einen Antrieb und ein sicherheitsgerichtet ausgebildetes Wegmesssystem mit einem Wegsensor und einer Kontrolleinrichtung für den Wegsensor umfasst und wobei die Schutzeinrichtung eine sicherheitsgerichtet ausgebildete Verstellsteuerung umfasst, die für eine, insbesondere redundante, Verarbeitung von Sensorsignalen des Wegsensors und der Kontrollanordnung und für eine geregelte Ansteuerung des Antriebs ausgebildet ist, wobei die Verstellsteuerung elektrisch mit der Maschinensteuerung für einen Empfang von Steuersignalen verbunden ist.

Die Biegemaschine kann beispielsweise als Abkantpresse oder Schwenkbiegemaschine ausgebildet sein und umfasst einen Maschinentisch, der als Bestandteil des Maschinenbetts ausgebildet ist und der eine Werkstückauflagefläche aufweist. Bei einer Abkantpresse kann vorgesehen sein, dass der Maschinentisch mit der Werkstückauflagefläche durch das auch als Matrize bezeichnete und üblicherweise ortsfest am Maschinenbett festgelegte Unterwerkzeug gebildet wird. Bei einer Abkantpresse wird der größenvariable Arbeitsspalt durch einen Abstand zwischen einer Unterkante des linearbeweglich am Maschinenbett gelagerten Oberwerkzeugs und einer Oberkante des am Maschinenbett festgelegten Unterwerkzeugs bestimmt. Bei einer Schwenkbiegemaschine wird der Arbeitsspalt durch einen linearbeweglich am Maschinenbett gelagerten Niederhalter und der Werkstückauflagefläche bestimmt.

Eine Linearbewegung des Oberwerkzeugs bzw. des Niederhalters wird durch eine Antriebseinrichtung bewirkt, bei der sich beispielsweise um eine Kombination einer Hydraulikpumpe und eines oder mehrerer Hydraulikzylinder oder um einen Elektromotor mit nachgeschalteter Getriebeeinrichtung handeln kann. In jedem Fall ist vorgesehen, dass die Maschinensteuerung dazu ausgebildet ist, Antriebsenergie, insbesondere elektrische Antriebsenergie, an die Antriebseinrichtung zur Verfügung zu stellen, um die gewünschte Relativbewegung des Oberwerkzeugs bzw. Niederhalters gegenüber dem Unterwerkzeug bzw. der Werkstückauflagefläche hervorzurufen und damit eine Vergrößerung oder Verkleinerung des Arbeitsspalts zu bewirken. Bei der Maschinensteuerung wird davon ausgegangen, dass diese nicht sicherheitsgerichtet ausgebildet ist, also insbesondere keine redundante Signalverarbeitung aufweist. Vielmehr ist die Maschinensteuerung dazu ausgebildet, ein vorgegebenes Arbeitsprogramm für die Biegemaschine abzuarbeiten und hierfür die notwendigen Bewegungen, insbesondere des Oberwerkzeugs bzw. Niederhalters, hervorzurufen.

Für einen sicheren Betrieb der Biegemaschine ist eine sicherheitsgerichtet ausgebildete Sicherheitsteuerung vorgesehen, deren Aufgabe darin besteht, die von der Maschinensteuerung an die Antriebseinrichtung bereitgestellte Antriebsenergie, beispielsweise durch Unterbrechung einer elektrischen Verbindung zwischen der Maschinensteuerung und der Antriebseinrichtung oder eines mit der Maschinensteuerung verbundenen Schütz und der Antriebseinrichtung, abzuschalten und einen möglichst raschen Stillstand der Biegemaschine, insbesondere im Hinblick auf das Oberwerkzeug bzw. den Niederhalter, zu gewährleisten.

Die Sicherheitssteuerung ist mit der Schutzeinrichtung verbunden, die zur optischen Überwachung des Arbeitsspalts ausgebildet ist und vorstehend bereits beschrieben wurde. Darüber hinaus kann die Sicherheitssteuerung beispielsweise mit einem Nothaltschalter verbunden sein, der in einer kritischen Situation unmittelbar vom Bediener bedient werden kann, um einen Nothalt der Biegemaschine herbeizuführen. Die Sicherheitssteuerung ist insbesondere dazu ausgebildet, bei Eintreffen eines sicherheitsgerichteten Abschaltsignals von der Lichtschrankensteuerung und/oder bei Nichtvorliegen eines sicherheitsgerichteten Freigabesignals von der Lichtschrankensteuerung die Abschaltung der Antriebseinrichtung für die Biegemaschine zu bewirken.

Bei einer Weiterbildung der Biegemaschine ist vorgesehen, dass die Verstellsteuerung in die Lichtschrankensteuerung integriert ist. Hierdurch kann die typischerweise für die Lichtschrankensteuerung vorgesehene Prozessorarchitektur, die beispielsweise zwei oder mehrere Prozessoren umfasst, auch für die Funktionen der Verstellsteuerung genutzt werden, ohne dass hierbei Abstriche im Hinblick auf die unabhängige Signalverarbeitung gemacht werden müssen.

In weiterer Ausgestaltung der Biegemaschine ist vorgesehen, dass die Verstellsteuerung eine Kommunikationsschnittstelle aufweist, die für einen Empfang von Steuerinformationen der Maschinensteuerung sowie für eine Ausgabe von Sicherheitsinformationen an die Maschinensteuerung und/oder an die Lichtschrankensteuerung und/oder an die separat ausgebildete Sicherheitssteuerung ausgebildet ist, wie dies bereits vorstehend beschrieben wurde. Bevorzugt ist vorgesehen, dass die Verstellsteuerung abgesehen von einer elektrischen Energieversorgung und der Kommunikation mit der Maschinensteuerungen der Sicherheitsteuerung vollständig autark arbeiten kann, also für ihre Funktion keine weiteren Informationen von anderen Komponenten wie der Lichtschrankensteuerung oder der Sicherheitssteuerung benötigt, was insbesondere bei einer Nachrüstung der Schutzeinrichtung an einer bereits bestehenden Biegemaschine von Interesse ist.

Vorzugsweise weist die Verstelleinrichtung der Biegemaschine für die Strahlenquelle und für den Strahlenempfänger jeweils einen individuell zugeordneten Antrieb auf. Hierdurch wird eine Integration der Schutzeinrichtung an einer Biegemaschine verglichen mit einer gemeinsamen Verstellung von Strahlenquelle und Strahlenempfänger erleichtert, da jeder der Antriebe an einer günstigen Position der Biegemaschine angebracht werden kann und keine Rücksicht auf die mechanische Kopplung zwischen Strahlenquelle und Strahlenempfänger genommen werden muss. Beispielhaft ist vorgesehen, dass lediglich der Antrieb für den Strahlenempfänger ein Wegmesssystem mit redundant ausgebildeter Sensoranordnung aufweist, während der Antrieb für die Strahlenquelle nicht mit einem Wegmesssystem ausgerüstet ist. In diesem Fall ist vorgesehen, dass bei einer Verstellung der Position des Strahlenempfängers eine entsprechende Verstellung der Position der Strahlenquelle vorgenommen wird, wobei durch Auswertung des Sensorsignals des Strahlenempfängers überprüft werden kann, ob eine korrekte Ausrichtung der Strahlenquelle gegenüber dem Strahlenempfänger vorliegt und gegebenenfalls eine Korrektur für den Antrieb der Strahlenquelle vorgenommen werden kann.

Die Aufgabe der Erfindung wird gemäß einem dritten Erfindungsaspekt durch ein Verfahren zum Betreiben einer Biegemaschine gelöst, dass die folgenden Schritte umfasst: Bereitstellen einer Information zu einer Werkzeughöhe eines Oberwerkzeugs einer Biegemaschine von einer Maschinensteuerung der Biegemaschine an eine der Biegemaschine zugeordnete, sicherheitsgerichtet ausgebildete Verstellsteuerung einer Verstelleinrichtung, , Ansteuern eines Antriebs der Verstelleinrichtung durch die Verstellsteuerung, um ein Strahlenbündel, das von einer Strahlenquelle bereitgestellt wird, und einen gegenüberliegend zur Strahlenquelle angeordneten Strahlenempfänger mit einer linearen Verstellbewegung in eine Referenzposition zu verlagern, die benachbart zu einer aus der Werkzeughöhe berechneten Vorgabeposition für eine Unterkante des Oberwerkzeugs angeordnet ist, Durchführen einer Positionsermittlung während der linearen Verstellbewegung der Strahlenquelle und des Strahlenempfängers gegenüber dem Oberwerkzeug, wobei die Positionsermittlung durch die Verstellsteuerung vorgenommen wird, die eine, insbesondere redundante, Verarbeitung eines Wegsignals eines Wegsensors der Verstelleinrichtung und eines Signals einer Kontrollanordnung der Verstelleinrichtung durchführt.

In einem ersten Verfahrensschritt wird von der Maschinensteuerungen eine Information über die Werkzeughöhe an die sicherheitsgerichtet ausgebildete Verstellsteuerung bereitgestellt. Bei dieser Werkzeughöhe handelt eine Erstreckung des Oberwerkzeugs in Richtung einer Bewegungsachse, wobei diese Bewegungsachse diejenige Raumrichtung repräsentiert, in der eine Annäherungs- und Entfernungsbewegung zwischen dem Oberwerkzeug und der Werkstückauflagefläche durchgeführt werden kann. Grundsätzlich wird davon ausgegangen, dass das Oberwerkzeug an einem linearbeweglich am Maschinenbett gelagerten Schlitten angebracht wird, der von der Antriebseinrichtung in Bewegung versetzt werden kann.

Wenn der Schlitten einen maximalen Abstand gegenüber der Werkstückauflagefläche einnimmt, ergibt sich eine maximale Ausdehnung des Arbeitsspalts als Differenz zwischen diesem maximalen Abstand und der Werkzeughöhe des Oberwerkzeugs. Um die gewünschte Absicherung des Arbeitsspalts vornehmen zu können, ist es erforderlich, dass die Strahlenquelle und der gegenüberliegend angeordnete Strahlenempfänger derart einer Unterkante des Oberwerkzeugs in Richtung eine Schließbewegung vorgelagert sind, dass bei einer Unterbrechung des von der Strahlenquelle bereitgestellten Strahlenbündels ein Stillstand des Oberwerkzeugs erreicht werden kann, ohne dass hierbei eine Quetschgefahr für einen Bediener auftritt. Der Abstand zwischen der Unterkante des Oberwerkzeugs und dem Strahlenbündel bemisst sich insbesondere aus den Anforderungen an einen minimalen Restspalt zur Vermeidung von Quetschungen sowie dem Bremsweg für das Oberwerkzeug. Der Bremsweg für das Oberwerkzeug ist unter anderem von einer Verfahrgeschwindigkeit für das Oberwerkzeug während der Schließbewegung, einer Verarbeitungsdauer einer Lichtschrankensteuerung für die Signale des Strahlenempfängers und eine Verarbeitungsdauer der Sicherheitsteuerung für ein Eintreffen des Abschaltsignals der Lichtschrankensteuerung abhängig.

Nach der Bereitstellung der Informationen zur Werkzeughöhe des Oberwerkzeugs an die Verstellsteuerung findet in der Verstellsteuerung auf Basis der bereitgestellten Werkzeughöhe eine Ermittlung einer Vorgabeposition und einer Referenzposition statt. Die Vorgabeposition ist diejenige Position, die die Unterkante des Oberwerkzeugs in einem gegebenen Maschinenkoordinatensystem der Biegemaschine theoretisch gemäß der bereitgestellten Information zur Werkzeughöhe einnimmt. Die Referenzposition ist diejenige Position, die die Strahlenquelle und der Strahlenempfänger relativ zum Oberwerkzeug einnehmen müssen, um eine Anordnung des Strahlenbündels unmittelbar benachbart zur Unterkante des Oberwerkzeugs und damit unmittelbar benachbart zur Vorgabeposition zu erzielen.

Vorzugsweise ist die Referenzposition maximal 1 mm unterhalb der Vorgabeposition und damit unterhalb der Unterkante des Oberwerkzeugs angesiedelt

Nach der Ermittlung der Vorgabeposition und der Referenzposition wird der Antrieb der Verstelleinrichtung von der Verstellsteuerung derart angesteuert, dass eine lineare Relativbewegung der Strahlenquelle und des Strahlenempfängers, insbesondere in Richtung der Referenzposition, bewirkt wird.

Dabei findet in der sicherheitsgerichtet ausgebildeten Verstellsteuerung eine Positionsermittlung für eine Verstelleinrichtung statt. Die Verstelleinrichtung trägt sowohl die Strahlenquelle als auch den Strahlenempfänger und bestimmt damit die räumliche Lage des von der Strahlenquelle bereitgestellten Strahlenbündels relativ zur Unterkante des Oberwerkzeugs. Diese Positionsermittlung basiert auf dem Sensorsignal eines Wegsensors, der der Verstelleinrichtung zugeordnet ist, sowie einer Kontrollanordnung der Verstelleinrichtung. Die Sensorsignale des Wegsensors und die Signale der Kontrollanordnung (bei der es sich rein exemplarisch um einen Wegsensor oder um eine Zeitmesseinrichtung handeln kann) werden in der Verstellsteuerung getrennt voneinander verarbeitet, um daraus zwei Positionsinformationen zu ermitteln. Anschließend werden die beiden Positionsinformationen miteinander verglichen und es wird für den Fall ein Positionswert ausgegeben, wenn die beiden Positionsinformationen innerhalb eines vorgegebenen Toleranzintervalls liegen, wobei dieser Positionswert beispielsweise für eine Positionsregelung der Verstelleinrichtung eingesetzt wird.

Vorzugsweise ist vorgesehen, dass während der Relativbewegung der Verstelleinrichtung gegenüber dem Oberwerkzeug fortlaufend neue Positionswerte ermittelt werden, um dadurch für die gesamte lineare Verlagerungsbewegung der Strahlenquelle und des Strahlenempfängers eine geregelte (closed loop) Positionierung der Verstelleinrichtung zu gewährleisten.

Soweit die Verstelleinrichtung die Strahlenquelle und den Strahlenempfänger derart gegenüber dem Oberwerkzeug angeordnet hat, dass sich das Strahlenbündel in der Referenzposition befindet, ist eine erste Phase des Verfahrens zum Betreiben der Biegemaschine abgeschlossen.

Bei einer Weiterbildung des Verfahrens ist vorgesehen, dass die Verstellsteuerung die Verstelleinrichtung derart ansteuert, dass vor der Verlagerung der Strahlenquelle und des Strahlenempfängers in die Referenzposition eine Verlagerung der Strahlenquelle und des Strahlenempfängers in einen maximalen Abstand gegenüber der Vorgabeposition erfolgt, um anschließend die Verlagerung der Strahlenquelle und des Strahlenempfängers in die Referenzposition durchzuführen. Durch diesen Zwischenschritt soll sichergestellt werden, dass eine falsche Information über die Werkzeughöhe des Oberwerkzeugs nicht zu einer Beeinträchtigung der Schutzwirkung der Schutzeinrichtung führt. Bei diesem Zwischenschritt überfährt das Strahlenbündel einen erheblichen Teil des Arbeitsspalts, um eventuell unterhalb der Vorgabeposition liegende Bereiche des Oberwerkzeugs erfassen zu können. Sofern bei der Durchführung der Verstellbewegung eine Unterbrechung des optischen Pfads zwischen der Strahlenquelle und dem Strahlenempfänger eintritt, erfolgt eine Stilllegung der Biegemaschine.

In weiterer Ausgestaltung des Verfahrens ist vorgesehen, dass die Verstellsteuerung die Verstelleinrichtung ausgehend von der Referenzposition derart ansteuert, dass die Strahlenquelle und der Strahlenempfänger in Richtung eines Abstands zwischen Referenzposition und der Vorgabeposition des Oberwerkzeugs verlagert werden. Bei diesem Verfahrensschritt werden die Strahlenquelle und der Strahlenempfänger und somit auch das Strahlenbündel entgegen der Schließrichtung für das Oberwerkzeug bewegt. Im Regelfall erfolgt hierdurch eine Annäherung des Strahlenbündels an die Unterkante des Oberwerkzeugs.

Vorteilhaft ist für das Verfahren vorgesehen, dass die Verstellsteuerung ein Fehlersignal ausgibt, wenn während der Verlagerung der Strahlenquelle und des Strahlenempfängers in Richtung des Abstands zwischen der Referenzposition und der Vorgabeposition ein vorgegebener maximaler Abstand gegenüber der Referenzposition ohne eine Unterbrechung des von der Strahlenquelle bereitgestellten Strahlenbündels erreicht wird und dass die Verstellsteuerung eine Bewegung der Verstelleinrichtung unterbricht, wenn während der Verlagerung der Strahlenquelle und des Strahlenempfängers in Richtung des Abstands zwischen der Referenzposition und der Vorgabeposition vor einem Erreichen des vorgegebenen maximalen Abstands gegenüber der Referenzposition eine Unterbrechung des von der Strahlenquelle bereitgestellten Strahlenbündels eintritt, wobei die Verstellsteuerung die Strahlenquelle und den Strahlenempfänger ausgehend von der Unterbrechungsposition nach einer Richtungsumkehr des Antriebs bis zu einer vorgegebenen Sicherheitsposition verfährt.

Sofern von der Maschinensteuerung eine korrekte Information zur Werkzeughöhe des Oberwerkzeugs bereitgestellt wurde und die daraufhin von der Verstellsteuerung vorgenommenen Schritte ebenfalls korrekt durchgeführt wurden, ist zu erwarten, dass durch die Verlagerung des Strahlenbündels aus der Referenzposition in Richtung der Vorgabeposition eine Unterbrechung des optischen Pfads eintritt, da das Strahlenbündel vom Oberwerkzeug blockiert wird. Sofern diese Blockierung des Strahlenbündels vor einem Erreichen eines vorgegebenen maximalen Abstands gegenüber der Referenzposition eintritt, kann davon ausgegangen werden, dass sämtliche vorgelagerten Verfahrensschritte korrekt durchgeführt wurden und dass das Oberwerkzeug tatsächlich die von der Maschinensteuerung angegebene Werkzeughöhe aufweist.

Tritt hingegen bei der Verlagerung des Strahlenbündels aus der Referenzposition in Richtung der Vorgabeposition keine Unterbrechung des optischen Pfads ein, sodass das Strahlenbündel den vorgegebenen maximalen Abstand gegenüber der Referenzposition ohne Unterbrechung erreicht, muss davon ausgegangen werden, dass entweder die Information zur Werkzeughöhe des Oberwerkzeugs nicht korrekt ist oder bei der Durchführung der vorgelagerten Verfahrensschritte wenigstens ein Fehler aufgetreten ist. In jedem Fall erfolgt hierbei die Ausgabe eines Fehlersignals von der Verstellsteuerung an die Sicherheitssteuerung, wodurch eine Inbetriebnahme der Biegemaschine verhindert wird. Dementsprechend wird in diesem Fall kein Biegevorgang durchgeführt.

Bevorzugt ist für das Verfahren vorgesehen, dass die sicherheitsgerichtete Steuereinrichtung die Verstelleinrichtung derart ansteuert, dass die Strahlenquelle und der Strahlenempfänger mit einem vorgegebenen Sicherheitsabstand von der Unterkantenposition angeordnet werden. Dieser Sicherheitsabstand bemisst sich insbesondere aus dem Bremsweg für das Oberwerkzeug sowie den jeweils beim Betrieb der Biegemaschine zu beachtenden Sicherheitsvorschriften.

In weiterer Ausgestaltung des Verfahrens ist vorgesehen, dass die sicherheitsgerichtete Steuereinrichtung ein Freigabesignal ausgibt, wenn die Strahlenquelle und der Strahlenempfänger in dem vorgegebenen Sicherheitsabstand von der Unterkantenposition angeordnet sind und dass ein Energiefluss von der Maschinensteuerung an ein dem Oberwerkzeug zugeordnetes Antriebssystem bereitgestellt wird, um eine Annäherungsbewegung zwischen dem Oberwerkzeug und einer Werkstückauflagefläche der Biegemaschine zu bewirken, wobei die Lichtschrankensteuerung ein Unterbrechungssignal ausgibt oder ein Freigabesignal abschaltet, wenn das das Strahlenbündel unterbrochen wird, und wobei eine mit der sicherheitsgerichteten Steuereinrichtung verbundene Sicherheitssteuerung eine Blockierung des Energieflusses bei Eintreffen des Unterbrechungssignals bewirkt.

Eine vorteilhafte Ausführungsform der Erfindung ist in der Zeichnung dargestellt. Hierbei zeigt:
- Figur 1: eine Vorderansicht einer rein exemplarisch als Schwenkbiegemaschine ausgebildeten Biegemaschine, die mit einer Maschinensteuerung, mit einer optischen Sicherungseinrichtung sowie einer zugeordneten Sicherheitssteuerung ausgerüstet ist, und
- Figur 2: eine schematische, teilweise geschnittene Seitenansicht der Biegemaschine gemäß der Figur 1.

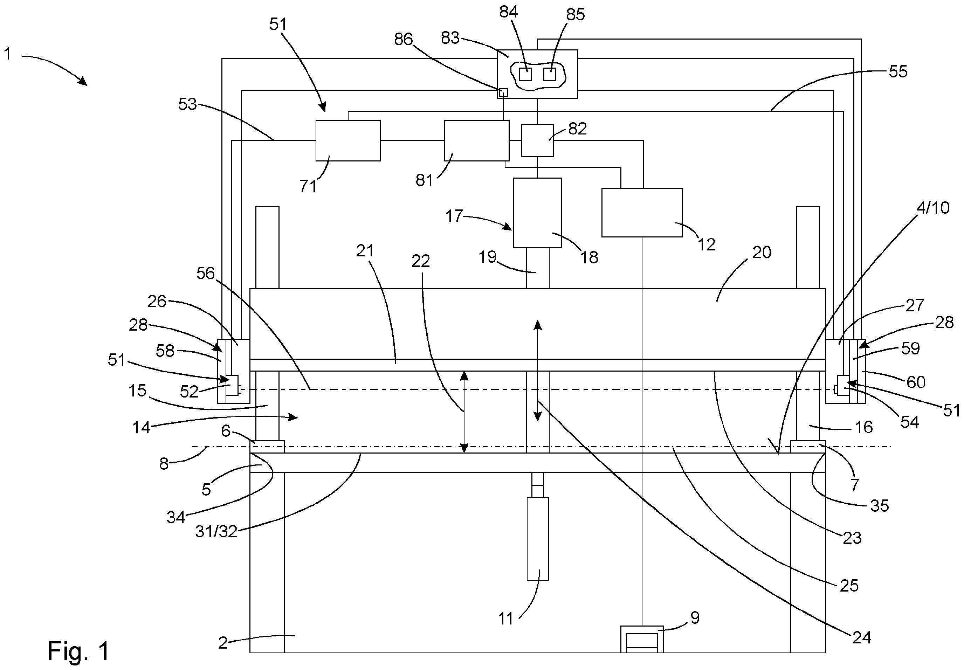

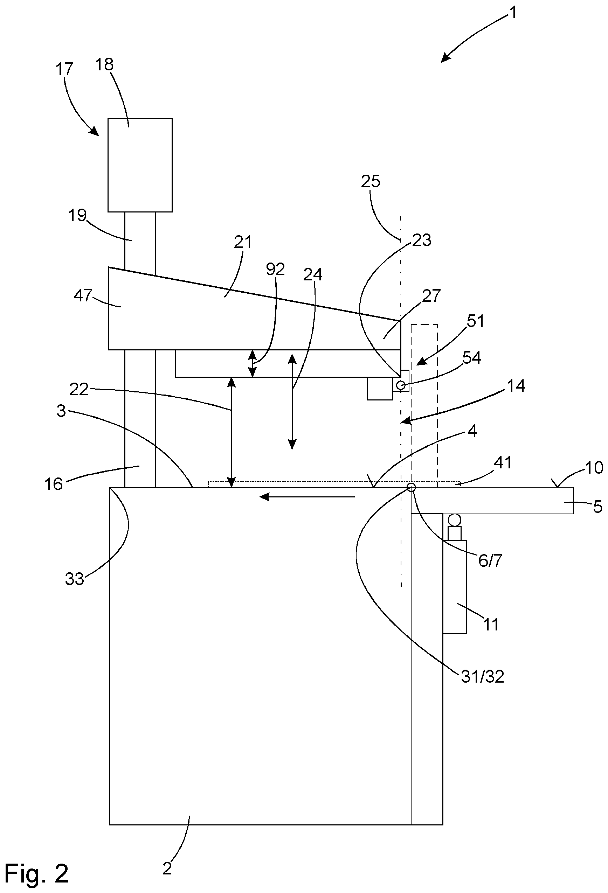

Eine in den Figuren 1 und 2 dargestellte, rein exemplarisch als Schwenkbiegemaschine ausgebildete Biegemaschine 1 umfasst ein Maschinenbett 2, an dem ein Werkstücktisch 3 ausgebildet ist, der eine exemplarisch eben ausgebildete Werkstückauflagefläche 4 umfasst. Gemäß den Darstellungen in den Figuren 1 und 2 ist die rein exemplarisch rechteckige Werkstückauflagefläche 4 horizontal ausgerichtet und erstreckt sich von einer in der Figur 1 sichtbaren Vorderkante 32 bis zu einer in der Figur 2 sichtbaren Hinterkante 33. Ferner erstreckt sich die Werkstückauflagefläche 4 von einer linken Seitenkante 34 bis zu einer rechten Seitenkante 35.

Ferner ist am Maschinenbett 2 eine Biegewange 5 schwenkbeweglich angeordnet, die sich mit einer längsten Kante 31 entlang der Vorderkante 32 der Werkstückauflagefläche 4 erstreckt. An einander entgegengesetzten Endbereichen ist die Biegewange 5 jeweils mit einem Schwenkgelenk 6, 7 am Maschinenbett 1 angebracht. Die Schwenkgelenke 6, 7 weisen eine gemeinsame Schwenkachse 8 auf, die parallel zur Werkstückauflagefläche 4 ausgerichtet ist.

Eine Arbeitsfläche 10 der Biegewange 5 kann mittels eines Schwenkantriebs 31 durch eine Schwenkbewegung der Biegewange 5 aus der Ruhestellung gemäß der Figur 1, in der die Arbeitsfläche 10 parallel und flächenbündig zur Werkstückauflagefläche 5 angeordnet ist, in eine in der Figur 2 gestrichelt dargestellte Funktionsstellung verschwenkt werden. In der Funktionsstellung nimmt die Arbeitsfläche 10 exemplarisch einen rechten Winkel gegenüber der Werkstückauflagefläche 4 ein, andere Winkelstellungen sind ebenfalls möglich. Eine Einleitung der Schwenkbewegung für die Biegewange 5 erfolgt über einen Fußschalter 9, der mit einer Maschinensteuerung 12 verbunden ist, die die Bewegung des Schwenkantriebs 31 steuern oder regeln kann.

Zur Festlegung eines in gestrichelter Darstellung in der Figur 2 gezeigten, rein exemplarisch plattenförmigen Werkstücks 41 an dem Werkstücktisch 3 ist ein beweglich am Maschinenbett 2 angebrachtes, auch als Klemmwange bezeichnetes, Oberwerkzeug 21 vorgesehen. Das Oberwerkzeug 21 ist an einem Schlitten 20 befestigt, der beidseitig mit nicht dargestellten Führungsmitteln an Führungssäulen 15, 16, die ihrerseits am Maschinenbett 2 festgelegt sind, linearbeweglich geführt ist. Ein Abstand 22 zwischen einer Unterkante 23 des Oberwerkzeugs 21 und dem Werkstücktisch 3 kann mittels eines Spindelantriebs 17 eingestellt werden, der einen Elektromotor 18 und eine Antriebsspindel 19 umfasst. Eine Bewegung des Schlittens 20 mit dem daran angebrachten Oberwerkzeug 21 zwischen einer in der Figur 1 gezeigten ersten Funktionsstellung mit maximalem Abstand 22 gegenüber der Werkstückauflagefläche 4 und einer nicht gezeigten zweiten Funktionsstellung mit minimalem Abstand gegenüber der Werkstückauflagefläche 4 kann damit längs einer als Doppelpfeil eingezeichneten Bewegungsachse 24 durchgeführt werden. Dabei bewegt sich die Unterkante 23 des Oberwerkzeugs 21 bei der Bewegung des Oberwerkzeugs 21 zwischen der ersten Funktionsstellung und der zweiten Funktionsstellung in einer gestrichelt in der Figur 2 eingezeichneten Bewegungsebene 25, die quer zur Werkstückauflagefläche 4 ausgerichtet ist und die Unterkante 23 beinhaltet.

Dem Oberwerkzeug 21 ist zur Absicherung des Arbeitsspalts 15 eine optische Sicherungseinrichtung 51 zugeordnet, die insbesondere am Schlitten 20 festgelegt sein kann. Die optische Sicherungseinrichtung 51 umfasst eine Strahlenquelle 52 und einen Strahlenempfänger 54. Zwischen der optischen Strahlenquelle 52 und dem zugeordneten optischen Strahlenempfänger 54 verläuft ein in gestrichelter Darstellung eingezeichneter Laserstrahl 56, der auch als Strahlenbündel bezeichnet werden kann. Ferner umfasst die optische Sicherungseinrichtung 51 eine Lichtschrankensteuerung 71.

Die Strahlenquelle 52 kann beispielsweise als diskrete Laserdiode ausgebildet sein und ist vorzugsweise derart konfiguriert, dass der jeweiligen Laserstrahl 56 in Form eines parallelen Strahlenbündels mit nahezu punktförmigem Querschnitt ausgesendet wird. Exemplarisch ist der Strahlenempfänger 54 derart ausgerichtet, dass der Laserstrahl 56 auf einen nicht eingezeichneten Bereich des Strahlenempfängers 54 auftrifft, der eine maximale optische Empfindlichkeit aufweist. Die Strahlenquelle 51 und der Strahlenempfänger 52 sind über Signalleitungen 53, 55 mit der Lichtschrankensteuerung 71 elektrisch verbunden. Die Lichtschrankensteuerung 71 ist sicherheitsgerichtet ausgebildet und weist zwei nicht näher dargestellte Prozessoren auf, mit denen über die Signalleitung 55 eintreffende Sensorsignale des Strahlenempfängers 52 redundant verarbeitet werden können. Sofern aus den Sensorsignalen des Strahlenempfängers 52 hervorgeht, dass eine Unterbrechung des Laserstrahls 56 vorliegt oder eine Abweichung zwischen den Verarbeitungsergebnissen der Prozessoren der Lichtschrankensteuerung 71 vorliegt, ist die Lichtschrankensteuerung 71 wahlweise dazu ausgebildet, ein Unterbrechungssignal auszugeben oder ein Freigabesignal abzuschalten. Hierdurch wird eine Auslösung der nachstehend näher beschriebenen Sicherheitssteuerung 81 bewirkt, die mit der Lichtschrankensteuerung 71 elektrisch verbunden ist.

Die Strahlenquelle 52 ist an einer ersten Verstellanordnung 26 angebracht, die die Strahlenquelle 52 linearbeweglich gegenüber dem Oberwerkzeug 21 verlagern kann, so dass die Strahlenquelle 52 eine lineare Relativbewegung längs der Bewegungsachse 24 relativ zum Oberwerkzeug 21 durchführen kann. Der ersten Verstellanordnung 26 ist ein erster Wegsensor 58 zugeordnet, der für eine Erfassung einer Position der Strahlenquelle 52 gegenüber dem Oberwerkzeug 21 ausgebildet ist.

Der Strahlenempfänger 54 ist an einer zweiten Verstellanordnung 27 angebracht, die den Strahlenempfänger 54 linearbeweglich gegenüber dem Oberwerkzeug 21 verlagern kann, so dass der Strahlenempfänger 54 eine lineare Relativbewegung längs der Bewegungsachse 24 relativ zum Oberwerkzeug 21 durchführen kann. Der zweiten Verstellanordnung 27 ist ein zweiter Wegsensor 59 zugeordnet, der für eine Erfassung einer Position des Strahlenempfängers 54 gegenüber dem Oberwerkzeug 21 ausgebildet ist.

Beispielhaft ist vorgesehen, dass lineare Bewegungen der Verstellanordnungen 26, 27 relativ zum Oberwerkzeug 21 von einer sicherheitsgerichtet ausgebildeten Verstellsteuerung 83 derart koordiniert werden, dass sich die Strahlenquelle 52 und der Strahlenempfänger 50 stets gegenüberliegen. Hierzu ist die Verstellsteuerung 83 über nicht bezeichnete elektrische Leitungen mit der ersten Verstellanordnung 26, mit der zweiten Verstellanordnung 27 sowie mit dem ersten Wegsensor 58 und dem zweiten Wegsensor 59 verbunden.

Rein exemplarisch kann vorgesehen werden, dass die erste Verstellanordnung 26 stets der zweiten Verstellanordnung 27 derart nachgeführt wird, dass der Strahlenempfänger 54 eine maximale Bestrahlung durch die Strahlenquelle 52 erfährt.

Die Verstellsteuerung 83 ist für eine Auswertung von Wegsignalen des ersten Wegsensors 58 und von Wegsignalen des zweiten Wegsensors 59 sowie zur geregelten Ansteuerung der ersten Verstellanordnung 26 und der zweiten Verstellanordnung 27 ausgebildet.

Da die beiden Wegsensoren 58 und 59 jeweils einer der beiden Verstellanordnungen 26, 27 zugeordnet sind, die jeweils unabhängig voneinander betrieben werden können, liegt für die jeweilige Position der Verstellanordnungen 26, 27 kein redundantes Sensorsignal vor. Um jedoch die Anforderungen an eine sicherheitsgerichtete Positionserfassung zumindest für die Verstellanordnung 27, die dem Strahlenempfänger 54 zugeordnet ist, erfüllen zu können, ist dieser Verstellanordnung 27 ein weiterer, dritter Wegsensor 60 zugeordnet, der ebenfalls über eine nicht bezeichnete elektrische Leitung mit der Verstellsteuerung 83 verbunden ist. Dabei bilden der zweite Wegsensor 59 und der dritte Wegsensor 60 ein redundant arbeitendes Wegmesssystem 70 für die Verstellanordnung 27.

Dabei bilden die erste Verstellanordnung 26, die zweite Verstellanordnung 27 und die Wegsensoren 58, 59, 60 eine Verstelleinrichtung 28, die mit der Verstellsteuerung 83 elektrisch verbunden sind und von dieser angesteuert werden können.

Ferner weist die Verstellsteuerung 83 für die interne Verarbeitung der Sensorsignale der Wegsensoren 58, 59, 60 einen ersten Prozessor 84 sowie einen zweiten Prozessor 85 auf, so dass eine redundante Berechnung von Positionswerten auf Basis der Sensorsignale ermöglicht ist. Dies ist eine notwendige Voraussetzung für die sicherheitsgerichtete Auslegung der Verstellsteuerung 83.

Die Sicherheitssteuerung 81 ist elektrisch mit der Lichtschrankensteuerung 71 verbunden und ist für eine Ansteuerung einer Abschalteinrichtung 82 ausgebildet. Bei der Abschalteinrichtung 82 kann es sich beispielsweise um ein elektrisches Schütz für den Elektromotor 18 handeln. Hiermit kann die Sicherheitssteuerung 81 beispielsweise trotz einer Bereitstellung von elektrischer Energie durch die Maschinensteuerung 12 an den Elektromotor 18 eine Stilllegung des Antriebsmotors 18 durch Unterbrechung der Energiezufuhr bewirken. Beispielhaft ist vorgesehen, dass die Sicherheitssteuerung 81 in regelmäßigen zeitlichen Abständen überprüft, ob von der Lichtschrankensteuerung 71 ein Freigabesignal vorliegt und ist dafür ausgebildet, eine Ansteuerung der Abschalteinrichtung vorzunehmen, sofern dieses Freigabesignal nicht vorliegt.

Aus der Seitenansicht gemäß der Figur 2 ist lediglich der Strahlenempfänger 54 erkennbar, während die zugeordnete Strahlenquelle 52 in der Figur 2 nicht dargestellt ist.

Eine Funktionsweise der Biegemaschine 1 kann wie folgt beschrieben werden: zunächst wird ein Oberwerkzeug 21 an dem Schlitten 20 festgelegt und eine Werkzeughöhe 92 des Oberwerkzeugs 21 über eine nicht dargestellte Eingabeeinrichtung an die Maschinensteuerung 12 bereitgestellt. Anschließend überträgt die Maschinensteuerung 12 die Werkzeughöhe 92 an die Verstellsteuerung 83, die hieraus eine Vorgabeposition errechnet, wobei diese Vorgabeposition derjenigen Position entspricht, die die Unterkante 23 des Oberwerkzeugs 21 relativ zu der ersten Verstellanordnung 26 und der zweiten Verstellanordnung 27 einnehmen müsste, sofern die Werkzeughöhe 92 richtig eingegeben wurde und das richtige Oberwerkzeug 21 montiert wurde. Ferner berechnet die Verstellsteuerung 83 eine Referenzposition, die unmittelbar benachbart zur Vorgabeposition angesiedelt ist und die denjenigen Ort bezeichnet, an dem das von der Strahlenquelle 52 bereitgestellte Strahlenbündel gerade noch nicht von der Störkontur des Oberwerkzeugs 21 unterbrochen wird.

Anschließend kann für die Verstellsteuerung 83 ein optionaler Kalibriervorgang vorgesehen werden, wie er insbesondere nach Montagearbeiten für die optische Sicherungseinrichtung 51 vorzusehen ist. Für diesen Kalibriervorgang steuert die Verstellsteuerung 83 die beiden Verstellanordnungen 26 und 27 derart an, dass der auch als Strahlenbündel bezeichnete Laserstrahl 56 in die Referenzposition verlagert wird, in der er unmittelbar unterhalb der Unterkante 23 des Oberwerkzeugs 21 angeordnet ist. Kommt es hierdurch nicht zu einer Unterbrechung des Laserstrahls, so werden beiden Verstellanordnungen 26 und 27 derart angesteuert, dass der Laserstrahl 56 einen vorgegebenen Sicherheitsabstand gegenüber der Referenzposition einnimmt. Anschließend erfolgt eine Inbetriebnahme des Spindelantriebs 17 durch die Maschinensteuerung 12, wobei ein Prüfstab mit definiertem Durchmesser auf die Werkstückauflagefläche 4 aufgelegt wird. Sofern eine Unterbrechung des Laserstrahls 56 durch den Prüfstab derart erfolgt, dass aufgrund nachfolgenden Abschaltung des Spindelantriebs 17 durch die Zusammenwirkung von Lichtschrankensteuerung 71, Sicherheitssteuerung 81 und Abschalteinrichtung 82 eine Abbremsung des Oberwerkzeugs 21 so erfolgt, dass der Prüfstab nicht vom Oberwerkzeug berührt wird, können die Positionen der beiden Verstellanordnungen 26, 27 in der Verstellsteuerung 83 gespeichert werden und für nachfolgende Einstellvorgänge genutzt werden. Damit ist der Kalibriervorgang beendet und es kann in den Normalbetrieb für die Biegemaschine 1 übergegangen werden.

Nach einem weiteren Wechsel des Oberwerkzeugs 21 überträgt die Maschinensteuerung 12 die Werkzeughöhe 92 des neuen Oberwerkzeugs 21 an die Verstellsteuerung 83, die hieraus eine neue Vorgabeposition und eine neue Referenzposition berechnet.

Daraufhin steuert die Lichtschrankensteuerung 83 die beiden Verstellanordnungen 26 und 27 derart an, dass der Laserstrahl 56 in die Referenzposition verlagert wird, in der er unmittelbar unterhalb der Unterkante 23 des Oberwerkzeugs 21 angeordnet ist. Sofern es durch die Verlagerung der Strahlenquelle 52 und des Strahlenempfängers 54 in die Referenzposition nicht zu einer Unterbrechung des Laserstrahls gekommen ist, führt die Verstellsteuerung 83 in einem nur optional vorgesehenen Schritt eine nächste Ansteuerung der beiden Verstellanordnungen 26 und 27 durch, bei der der Laserstrahl 56 in Richtung der Unterkante 23 des Oberwerkzeugs 21 verlagert wird. Kommt es hierbei zu einer Unterbrechung des Laserstrahls 56, da der optische Pfad zwischen der Strahlenquelle 52 und dem Strahlenempfänger 54 durch das Oberwerkzeug 21 blockiert wird, bevor der Laserstrahl 56 einen maximalen Abstand zur Referenzposition einnimmt, so bewirkt die Verstellsteuerung 83 eine Bewegungsumkehr für die beiden Verstellanordnungen 26, 27 durch, um die Strahlenquelle 52 und den Strahlenempfänger 54 ausgehend von der Position, in der die Unterbrechung des Laserstrahls 56 eingetreten ist, in den vorgegebenen Sicherheitsabstand gegenüber der Vorgabeposition zu bringen. Kommt es hingegen bei der Verlagerung des Laserstrahls 56 in Richtung der Unterkante 23 des Oberwerkzeugs 21 nicht zu einer Unterbrechung des Laserstrahls 56, bis dieser den maximalen Abstand zur Referenzposition einnimmt, stellt die Verstellsteuerung 83 ein entsprechendes Signal an der Kommunikationsschnittstelle 86 für die Sicherheitssteuerung 81 bereit, da in diesem Fall davon ausgegangen werden muss, dass die von der Maschinensteuerung 12 bereitgestellte Werkzeughöhe nicht korrekt ist und daher eine Inbetriebnahme der Biegemaschine 1 unterbunden werden muss.

Konnte eine Unterbrechung des Laserstrahls 56 festgestellt werden und hat der Laserstrahl 56 gegenüber der Unterkante 23 des Oberwerkzeugs 21 den vorgegebenen Sicherheitsabstand eingenommen, so kann die Verstellsteuerung 83 ein Freigabesignal an die Sicherheitssteuerung 81 bereitstellen, sodass anschließend bei Betätigung des Fußschalters 9 eine Annäherungsbewegung des Oberwerkzeugs 21 an die Werkstückauflagefläche 4 zur Festlegung des Werkstücks 41 durchgeführt werden kann.

Wird der Laserstrahl 56 während der Annäherungsbewegung des Oberwerkzeugs 21 an die Werkstückauflagefläche 4 unterbrochen, stellt die Lichtschrankensteuerung 83 an der Kommunikationsschnittstelle 86 ein entsprechendes Signal für die Sicherheitssteuerung 81 zur Verfügung, die ihrerseits die Abstand Einrichtung 82 ansteuert, um eine möglichst rasche Abbremsung des Schlittens 20 mit dem daran befestigten Oberwerkzeug 21 zu bewirken.

Beispielhaft kann vorgesehen werden, dass bei Unterschreitung eines vorgegebenen Mindestabstands zwischen der Unterkante 23 des Oberwerkzeugs 21 und der Werkstückauflagefläche 4 eine Ausblendung des Sensorsignals des Strahlenempfängers 56 in der Lichtschrankensteuerung 83 vorgenommen wird.

## Patentansprüche

1. Schutzeinrichtung (51) zur Absicherung eines Arbeitsspalts (14) einer Umformeinrichtung (1), mit einer Strahlenquelle (52), die zur Bereitstellung eines Strahlenbündels (56) in den Arbeitsspalt (14) ausgebildet ist, und mit einem gegenüberliegend zur Strahlenquelle (52) angeordneten Strahlenempfänger (54), der zum Empfang von Strahlen des Strahlenbündels (56) ausgebildet ist, sowie mit einer sicherheitsgerichtet ausgebildeten Lichtschrankensteuerung (71), die zur redundanten Verarbeitung von Sensorsignalen des Strahlenempfängers (54) ausgebildet ist, mit einer Verstelleinrichtung (28), die zur Anbringung an einem Maschinenrahmen oder an einem Oberwerkzeug (21) einer Umformeinrichtung (1) sowie zur Bereitstellung einer linearen Bewegung für die Strahlenquelle (52) und den Strahlenempfänger (54) ausgebildet ist, wobei die Verstelleinrichtung (28) einen Antrieb (26, 27) und ein sicherheitsgerichtet ausgebildetes Wegmesssystem (58, 59, 60) mit einem Wegsensor und einer Kontrollanordnung für den Wegsensor umfasst, sowie mit einer sicherheitsgerichtet ausgebildeten Verstellsteuerung (83), die mit der Verstelleinrichtung (28) verbunden ist und die für eine Auswertung von Sensorsignalen des Wegsensors und von Signalen der Kontrollanordnung und für eine geregelte Ansteuerung des Antriebs (26, 27) ausgebildet ist.

2. Schutzeinrichtung (51) nach Anspruch 1, **dadurch gekennzeichnet, dass** die Verstellsteuerung (83) eine Kommunikationsschnittstelle (86) aufweist, die für einen Empfang von Steuerinformationen einer Maschinensteuerung (12) sowie für eine Ausgabe von Sicherheitsinformationen an die Maschinensteuerung (12) und/oder an die Lichtschrankensteuerung (71) und/oder an eine Sicherheitssteuerung (81) ausgebildet ist.

3. Biegemaschine (1) mit einem Maschinenbett (2), an dem ein Maschinentisch (3) ausgebildet ist, der eine zum Auflegen eines Werkstücks (41) ausgebildete Werkstückauflagefläche (4) aufweist, sowie mit einem linearbeweglich längs einer Bewegungsachse (24) am Maschinenbett (2) gelagerten Oberwerkzeug (21), dem eine Antriebseinrichtung (17) zugeordnet ist und das mit dem Maschinentisch (3) einen größenvariablen Arbeitsspalt (14) bestimmt, mit einer Maschinensteuerung (12) zur Bereitstellung von Antriebsenergie an die Antriebseinrichtung (17), mit einer Sicherheitssteuerung (81) zur Unterbrechung einer Antriebsbewegung der Antriebseinrichtung (17), sowie mit einer Schutzeinrichtung (51) zur Absicherung des Arbeitsspalts (14), die eine Strahlenquelle (52) zur Bereitstellung eines optischen Strahlenbündels (56) und einen gegenüberliegend zur Strahlenquelle (52) angeordneten Strahlenempfänger (54) zum Empfang von Strahlen des optischen Strahlenbündels (56) sowie eine sicherheitsgerichtet ausgebildete Lichtschrankensteuerung (71) zur redundanten Verarbeitung von Sensorsignalen des Strahlenempfängers (54) aufweist, wobei die Schutzeinrichtung (51) eine Verstelleinrichtung (28) umfasst, die am Maschinenbett (2) oder am Oberwerkzeug (21) angebracht ist und die zur Bereitstellung einer linearen Bewegung der Strahlenquelle (52) und des Strahlenempfängers (54) längs der Bewegungsachse (24) ausgebildet ist, wobei die Verstelleinrichtung (28) einen Antrieb (26, 27) und ein sicherheitsgerichtet ausgebildetes Wegmesssystem (59, 60) mit einem Wegsensor und einer Kontrollanordnung für den Wegsensor umfasst und wobei die Schutzeinrichtung (51) eine sicherheitsgerichtet ausgebildete Verstellsteuerung (83) umfasst, die für eine, insbesondere redundante, Verarbeitung von Sensorsignalen des Wegsensors und der Kontrollanordnung und für eine geregelte Ansteuerung des Antriebs (26, 27) ausgebildet ist, wobei die Verstellsteuerung (83) elektrisch mit der Maschinensteuerung (12) für einen Empfang von Steuersignalen verbunden ist.

4. Biegemaschine nach Anspruch 3, **dadurch gekennzeichnet, dass** die Verstellsteuerung (83) in die Lichtschrankensteuerung (71) integriert ist.

5. Biegemaschine nach Anspruch 3, **dadurch gekennzeichnet, dass** die Verstellsteuerung (83) eine Kommunikationsschnittstelle (86) aufweist, die für einen Empfang von Steuerinformationen der Maschinensteuerung (12) sowie für eine Ausgabe von Sicherheitsinformationen an die Lichtschrankensteuerung (71) und/oder an die separat ausgebildete Sicherheitssteuerung (81) ausgebildet ist.

6. Biegemaschine nach Anspruch 3, 4 oder 5, **dadurch gekennzeichnet, dass** die Verstelleinrichtung (28) für die Strahlenquelle (52) und für den Strahlenempfänger (54) jeweils einen individuell zugeordneten Antrieb (26, 27) aufweist.

7. Verfahren zum Betreiben einer Biegemaschine (1), mit den Schritten: Bereitstellen einer Information zu einer Werkzeughöhe eines Oberwerkzeugs (21) einer Biegemaschine (1) von einer Maschinensteuerung (12) der Biegemaschine (1) an eine der Biegemaschine (1) zugeordnete, sicherheitsgerichtet ausgebildete Verstellsteuerung (83) einer Verstelleinrichtung (28), 52Ansteuern eines Antriebs (26, 27) der Verstelleinrichtung (28) durch die Verstellsteuerung (83), um ein Strahlenbündel (56), das von einer Strahlenquelle (52) bereitgestellt wird, und einen gegenüberliegend zur Strahlenquelle (52) angeordneten Strahlenempfänger (54) mit einer linearen Verstellbewegung in eine Referenzposition zu verlagern, die benachbart zu einer aus der Werkzeughöhe berechneten Vorgabeposition für eine Unterkante (23) des Oberwerkzeugs (21) angeordnet ist, Durchführen einer Positionsermittlung während der linearen Verstellbewegung der Strahlenquelle (52) und des Strahlenempfängers (54) gegenüber dem Oberwerkzeug (21), wobei die Positionsermittlung durch die Verstellsteuerung (83) vorgenommen wird, die eine, insbesondere redundante, Verarbeitung eines Wegsignals eines Wegsensors (59, 60) der Verstelleinrichtung (28) und eines Kontrollsignals einer Kontrollanordnung der Verstelleinrichtung (28) durchführt.

8. Verfahren nach Anspruch 7, **dadurch gekennzeichnet, dass** die Verstellsteuerung (83) die Verstelleinrichtung (28) derart ansteuert, dass vor der Verlagerung der Strahlenquelle (52) und des Strahlenempfängers (54) in die Referenzposition eine Verlagerung der Strahlenquelle (52) und des Strahlenempfängers (54) in einen maximalen Abstand gegenüber der Vorgabeposition erfolgt, um anschließend die Verlagerung der Strahlenquelle (52) und des Strahlenempfängers (54) in die Referenzposition durchzuführen.

9. Verfahren nach Anspruch 7 oder 8, **dadurch gekennzeichnet, dass** die Verstellsteuerung (83) die Verstelleinrichtung (28) ausgehend von der Referenzposition derart ansteuert, dass die Strahlenquelle (52) und der Strahlenempfänger (54) in Richtung eines Abstands (22) zwischen Referenzposition und der Vorgabeposition des Oberwerkzeugs (21) verlagert werden.

10. Verfahren nach Anspruch 9, **dadurch gekennzeichnet, dass** die Verstellsteuerung ein Fehlersignal ausgibt, wenn während der Verlagerung der Strahlenquelle (52) und des Strahlenempfängers (54) in Richtung des Abstands (22) zwischen der Referenzposition und der Vorgabeposition ein vorgegebener maximaler Abstand gegenüber der Referenzposition ohne eine Unterbrechung des von der Strahlenquelle (52) bereitgestellten Strahlenbündels (56) erreicht wird und dass die Verstellsteuerung (83) eine Bewegung der Verstelleinrichtung (28) unterbricht, wenn während der Verlagerung der Strahlenquelle (52) und des Strahlenempfängers (54) in Richtung des Abstands (22) zwischen der Referenzposition und der Vorgabeposition vor einem Erreichen des vorgegebenen maximalen Abstands gegenüber der Referenzposition eine Unterbrechung des von der Strahlenquelle (52) bereitgestellten Strahlenbündels (56) eintritt.

11. Verfahren nach einem der Ansprüche 7 bis 10, **dadurch gekennzeichnet, dass** die Verstellsteuerung (83) die Verstelleinrichtung (28) derart ansteuert, dass die Strahlenquelle (26) und der Strahlenempfänger (27) mit einem vorgegebenen Sicherheitsabstand von der Unterkantenposition angeordnet werden.

12. Verfahren nach Anspruch 11, **dadurch gekennzeichnet, dass** die Verstellsteuerung (83) ein Freigabesignal an die Maschinensteuerung (12) ausgibt, wenn die Strahlenquelle und der Strahlenempfänger in dem vorgegebenen Sicherheitsabstand von der Unterkantenposition angeordnet sind und dass ein Energiefluss von der Maschinensteuerung (12) an ein dem Oberwerkzeug (21) zugeordnetes Antriebssystem (17) bereitgestellt wird, um eine Annäherungsbewegung zwischen dem Oberwerkzeug (21) und einer Werkstückauflagefläche (4) der Biegemaschine (1) zu bewirken, wobei die Lichtschrankensteuerung (71) ein Unterbrechungssignal ausgibt, wenn das das Strahlenbündel unterbrochen wird, und wobei eine mit der Lichtschrankensteuerung (71) verbundene Sicherheitssteuerung (81) eine Blockierung des Energieflusses an das Antriebssystem (17) bei Eintreffen des Unterbrechungssignals bewirkt.
